(19) **Europäisches Patentamt / European Patent Office / Office européen des brevets**

(11) **EP 4 239 944 B1**

(12) **FASCICULE DE BREVET EUROPEEN**

(45) Date de publication et mention de la délivrance du brevet:
**20.03.2024 Bulletin 2024/12**

(21) Numéro de dépôt: **23150780.7**

(22) Date de dépôt: **09.01.2023**

(51) Classification Internationale des Brevets (IPC):
**H04L 9/00** *(2022.01)* **H04L 9/32** *(2006.01)*

(52) Classification Coopérative des Brevets (CPC):
**H04L 9/004; H04L 9/3252;** H04L 2209/16

(54) **PROCÉDÉ DE SIGNATURE CRYPTOGRAPHIQUE D'UNE DONNÉE, DISPOSITIF ÉLECTRONIQUE ET PROGRAMME D'ORDINATEUR ASSOCIÉS**

VERFAHREN ZUR KRYPTOGRAPHISCHEN SIGNATUR EINER DATENINFORMATION, ELEKTRONISCHE VORRICHTUNG UND COMPUTERPROGRAMM DAFÜR

METHOD FOR CRYPTOGRAPHIC SIGNING OF A DATA ITEM, ASSOCIATED ELECTRONIC DEVICE AND COMPUTER PROGRAM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **03.03.2022 FR 2201866**

(43) Date de publication de la demande:
**06.09.2023 Bulletin 2023/36**

(73) Titulaire: **IDEMIA France**
**92400 Courbevoie (FR)**

(72) Inventeurs:
• **DOTTAX, Emmanuelle**
**92400 COURBEVOIE (FR)**
• **HOUZELOT, Agathe**
**92400 COURBEVOIE (FR)**

• **GIRAUD, Christophe**
**92400 COURBEVOIE (FR)**

(74) Mandataire: **Idemia**
**2, place Samuel de Champlain**
**92400 Courbevoie (FR)**

(56) Documents cités:
**EP-B1- 2 553 866**

• **DOTTAX EMMANUELLE ET AL: "White-Box ECDSA: Challenges and Existing Solutions", 21 octobre 2021 (2021-10-21), ARXIV.ORG, CORNELL UNIVERSITY LIBRARY, 201 OLIN LIBRARY CORNELL UNIVERSITY ITHACA, NY 14853, PAGE(S) 184 - 201, XP047614346, * section 4.1, masking ; algorithm 1 ; section 4.2, Redundancy and Checks of Consistency ***

**Description**

La présente invention concerne le domaine technique de la cryptographie.

Elle concerne plus particulièrement un procédé de traitement cryptographique, ainsi qu'un dispositif électronique et un programme d'ordinateur associés.

Lorsqu'un algorithme cryptographique est mis en oeuvre au moyen d'un logiciel exécuté dans un environnement non sécurisé, des mesures particulières doivent être prises pour éviter qu'un attaquant puisse avoir accès à des données secrètes (par exemple des clés cryptographiques) en prenant simplement le contrôle de cet environnement.

La recherche de techniques permettant de sécuriser la mise en oeuvre d'un algorithme cryptographique dans un environnement non sécurisé est connue sous le nom de cryptographie en boîte blanche (en anglais : "white box cryptography").

L'article "White Box Cryptography and an AES implementation", de S. Chow et al. in, Post-Proceedings of the 9th Annual Workshop on Selected Areas in Cryptography (SAC'02), 15-16 août 2002 propose par exemple une technique pour produire des algorithmes de type AES adaptés chacun à une clé cryptographique particulière.

Pour les solutions généralement proposées dans ce cadre, l'algorithme cryptographique est décomposé en une série de traitements élémentaires et des tables de correspondance (en anglais : "Look-Up Tables") associées respectivement à ces traitements élémentaires sont utilisées pour manipuler des données masquées.

Ces solutions sont particulièrement consommatrices de mémoire du fait de l'utilisation de ces nombreuses tables de correspondance.

On connaît le traitement cryptographique de données sur courbe elliptique par exemple pour la signature d'une donnée. La norme FIPS 186-4 "Digital Signature Standard (DSS)" du National Institute of Standards and Technology (NIST) publié en Juillet 2013 décrit ainsi un algorithme de signature de type ECDSA.

Les propriétés des courbes elliptiques sur les corps finis sont utilisées lors des calculs impliqués dans le traitement des données tel que la signature d'une donnée. On manipule des éléments d'un groupe de points d'une courbe elliptique, d'ordre fini et muni d'une opération d'addition de deux points de la courbe elliptique.

Pour la signature d'une donnée au moyen d'une clé privée, on associe un premier élément du groupe à un point générateur dudit groupe et on détermine une coordonnée affine d'un point de signature égal à la combinaison, au moyen de ladite opération, d'éléments égaux au point générateur et en nombre égal à un premier scalaire. On détermine aussi une partie de signature à partir de la clé privée, du premier scalaire, de ladite coordonnée affine et de la donnée. La signature du message est constituée de la coordonnée affine et de la partie de signature.

Le premier scalaire utilisé peut être déterminé par tirage aléatoire mais il peut être relativement facile pour un attaquant de bloquer les sources d'aléas, notamment dans le contexte des implémentations boite blanche. Le premier scalaire utilisé peut également être déterminé par application d'un algorithme pseudo aléatoire à la donnée.

Dans chacun de ces deux cas, la signature d'un message donné sera alors toujours la même, ce qui rend efficace l'attaque proposée dans « Attacking Deterministic Signature Schemes using Fault Attacks », de Damian Poddebniak, Juraj Somorovsky, Sébastian Schinzel, Manfred Lochter et Paul Rosier, DOI 10.1109/EuroSP.2018.00031, 2018. Cette attaque consiste à signer deux fois la même donnée et à perturber le calcul de la coordonnée affine. Un attaquant obtient ainsi la coordonnée affine correcte, une coordonnée affine fautée, la partie de signature correcte et une partie de signature fautée avec la coordonnée affine fautée. Il peut alors retrouver la clé privée utilisée pour signer la donnée.

Pour se protéger contre cette attaque, il existe deux méthodes.

La première méthode consiste à vérifier la signature de la donnée en utilisant une clé publique associée à la clé privée. La vérification est toutefois plus lente que la signature et son implémentation en boite blanche est aussi particulièrement consommatrice de mémoire.

La deuxième méthode consiste à calculer deux fois la signature de la donnée et à comparer les deux signatures ainsi calculées. Cependant, cette méthode double le temps de calcul et nécessite de doubler l'implémentation en boite blanche pour se prémunir contre les attaques doubles fautes qui injectent la même erreur, ce qui consomme deux fois plus de mémoire.

Il est également connu de l'état de la technique l'article Dottax E. et al: "White-Box ECDSA: Challenges and Existing Solutions", 21 octobre 2021 (2021-10-21), ARXIV.ORG, p. 184-201.

Pour remédier à ces inconvénients, la présente invention propose un procédé de signature selon l'objet de la revendication 1.

D'autres caractéristiques avantageuses et non limitatives du procédé conforme à l'invention, prises individuellement ou selon toutes les combinaisons techniquement possibles, sont les suivantes :

- le scalaire sélectionné est le deuxième scalaire de dérivation et le point sélectionné est le point générateur,
- le scalaire sélectionné a pour valeur un et le point sélectionné est le premier point générateur dérivé.
- le procédé comprend en outre une étape de détermination du premier point générateur dérivé par combinaison au moyen de ladite opération, d'éléments égaux au point générateur de la courbe et en nombre égal au deuxième scalaire de dérivation et une étape de détermination du deuxième point générateur dérivé par combinaison au moyen de ladite opération, d'éléments égaux au point sélectionné de la courbe et en nombre égal au premier scalaire de dérivation,

- le deuxième scalaire de dérivation et le premier scalaire de dérivation sont chacun déterminés par tirage aléatoire ou par application d'un algorithme pseudo aléatoire à la donnée,
- le troisième scalaire intermédiaire vaut un,
- si le scalaire sélectionné vaut un, le troisième scalaire intermédiaire a une valeur non nulle,
- le premier scalaire intermédiaire est déterminé par tirage aléatoire ou par application d'un algorithme pseudo aléatoire à la donnée,
- le troisième scalaire intermédiaire est déterminé par tirage aléatoire,
- le deuxième scalaire de dérivation a une valeur strictement supérieure à un,
- la partie de signature est égale, modulo l'ordre du groupe, au scalaire résultat d'un produit de l'inverse multiplicatif du premier scalaire intermédiaire, de l'inverse multiplicatif du deuxième scalaire de dérivation et d'un scalaire de signature intermédiaire, ledit scalaire de signature intermédiaire étant égal à la somme d'un condensat de la donnée par une fonction de hachage et d'un scalaire résultat d'un produit de la coordonnée affine du premier point de signature et de la clé privée, et l'autre partie de signature est la coordonnée affine du deuxième point de signature.
- la partie de signature est égale, modulo l'ordre du groupe, à la somme du premier scalaire intermédiaire et d'un scalaire résultat d'un produit de la clé privée et d'un condensat d'une donnée intermédiaire par une fonction de hachage, ladite donnée intermédiaire étant la concaténation de la coordonnée affine du premier point de signature, d'une autre coordonnée affine du premier point de signature, de deux coordonnées affines d'un autre point de la courbe et de la donnée, et le procédé comprend en outre une étape de détermination de l'autre partie de signature par concaténation de la coordonnée affine du deuxième point de signature et d'une autre coordonnée affine du deuxième point de signature,
- la partie de signature est égale, modulo l'ordre du groupe, à la somme du premier scalaire intermédiaire et d'un scalaire résultat d'un produit de la clé privée et d'un condensat d'une donnée intermédiaire par une fonction de hachage, ladite donnée intermédiaire étant la concaténation de la coordonnée affine du premier point de signature, d'une autre coordonnée affine du premier point de signature, et de la donnée, et le procédé comprend en outre une étape de détermination de l'autre partie de signature par application de la fonction de hachage à la concaténation de la coordonnée affine du deuxième point de signature, d'une autre coordonnée affine du deuxième point de signature, et de la donnée,

- l'étape de détermination du premier point de signature et l'étape de détermination de la partie de signature sont implémentées en boite blanche,
- seules l'étape de détermination du premier point de signature et l'étape de détermination de la partie de signature sont implémentées en boite blanche-.

L'invention propose également un programme d'ordinateur comprenant des instructions exécutables par un processeur et adaptées pour la mise en oeuvre d'un procédé de signature cryptographique d'une donnée tel que défini précédemment, lorsque ces instructions sont exécutées par le processeur.

L'invention propose aussi un dispositif électronique apte à mettre en oeuvre une signature cryptographique d'une donnée à partir d'une clé privée et d'un groupe fini de points d'une courbe elliptique, ledit groupe étant muni d'une opération d'addition de deux points de la courbe elliptique et comprenant un point générateur, ledit dispositif électronique comprenant

- un bloc de détermination d'un premier point de signature égal à la combinaison au moyen de ladite opération, d'éléments égaux à un premier point générateur dérivé de la courbe et en nombre égal à un premier scalaire intermédiaire, et
- un bloc de détermination d'une partie de signature à partir de la clé privée, du premier scalaire intermédiaire, d'une coordonnée affine du premier point de signature et de la donnée,
- un bloc de détermination d'un deuxième scalaire intermédiaire en additionnant ou soustrayant à un scalaire résultat d'un produit du premier scalaire intermédiaire et d'un scalaire sélectionné, un scalaire résultat d'un produit d'un premier scalaire de dérivation et d'un troisième scalaire intermédiaire,
- un bloc de détermination d'un deuxième point de signature égal à la combinaison au moyen de ladite opération, d'éléments égaux à un point sélectionné de la courbe et en nombre égal au deuxième scalaire intermédiaire, et d'autres éléments égaux à un point parmi un deuxième point générateur dérivé ou l'opposé du deuxième point générateur dérivé pour ladite opération et en nombre égale au troisième scalaire intermédiaire,

et dans lequel :

- le premier point générateur dérivé est égal à la combinaison au moyen de ladite opération, d'éléments égaux à un point générateur de la courbe et en nombre égal à un deuxième scalaire de dérivation,
- le deuxième point générateur dérivé est égal à la combinaison au moyen de ladite opération, d'éléments égaux au point sélectionné de la courbe et en nombre égal au premier scalaire de dérivation, et
- la signature de la donnée comprend la partie de signature et une autre partie de signature déterminée à partir d'une coordonnée affine du deuxième point de signature,

- le premier point de signature et le deuxième point de signature sont calculés de deux manières différentes,
- les autres éléments sont égaux au deuxième point générateur dérivé et la détermination du deuxième scalaire intermédiaire est par soustraction, ou
- les autres éléments sont égaux à l'opposé dudit deuxième point générateur dérivé et la détermination du deuxième scalaire intermédiaire est par addition.

Ce dispositif électronique peut être configuré pour la mise en oeuvre de chacune des possibilités de réalisation envisagées pour le procédé de signature cryptographique d'une donnée tel que défini précédemment.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres. D'autres caractéristiques et avantages de la présente invention ressortiront de la description faite ci-dessous, en référence aux figures annexées qui en illustrent des exemples de réalisation dépourvus de tout caractère limitatif.

Sur les figures:

Figure 1 représente schématiquement les éléments principaux d'une entité électronique au sein de laquelle est mise en oeuvre l'invention ;
Figure 2 représente un exemple de courbe elliptique et d'un groupe de points de la courbe elliptique ;
Figure 3 représente sous forme de logigramme les étapes principales d'un procédé de signature cryptographique d'une donnée selon un premier mode d'implémentation de l'invention ;
Figure 4 représente sous forme de logigramme les étapes principales d'un procédé de signature cryptographique d'une donnée selon un autre mode d'implémentation de l'invention.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

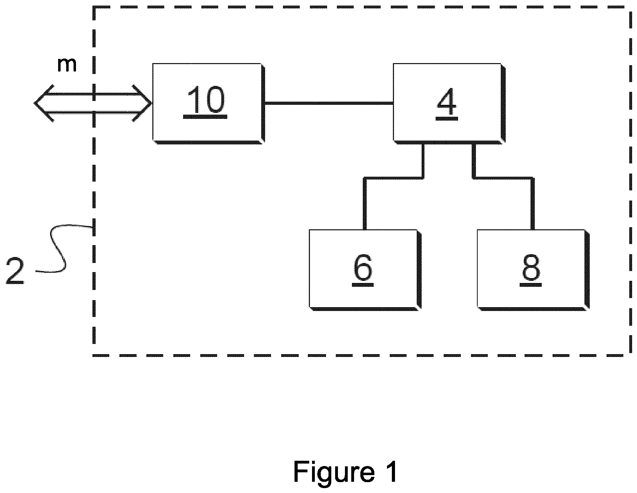

La figure 1 représente schématiquement un dispositif électronique 2 comprenant un processeur 4 (par exemple un microprocesseur), un module de mémorisation 6, une mémoire vive 8 et un module de communication 10.

La mémoire vive 8 et le module de mémorisation 6 sont chacun liés au processeur 4 de sorte que le processeur 4 peut lire ou écrire des données dans chacune de ces mémoires 6, 8.

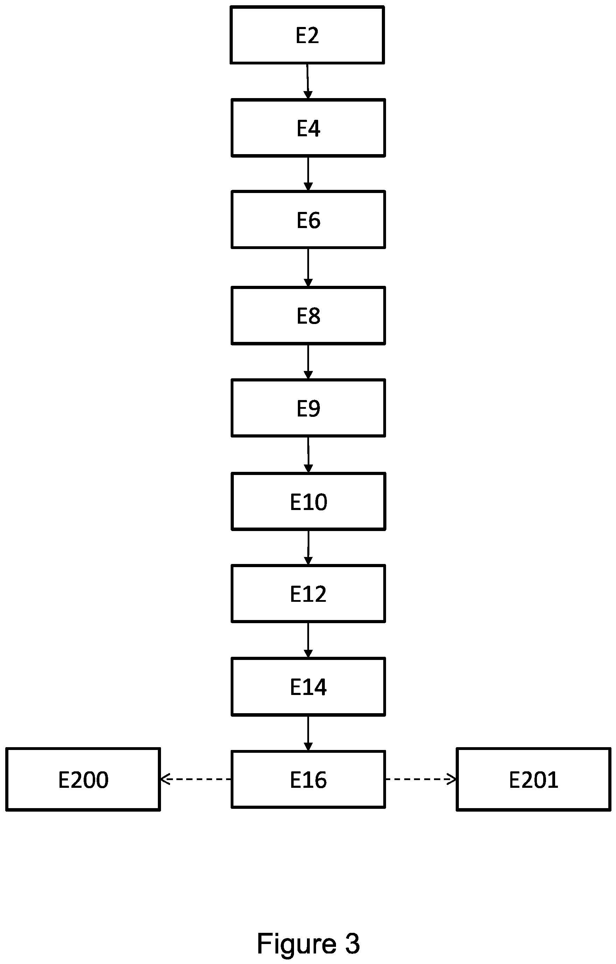

Le module de mémorisation 6 mémorise des instructions de programme d'ordinateur, dont certaines sont conçues pour mettre en oeuvre un procédé de signature cryptographique tel que l'un au moins de ceux décrits en référence aux figures 3 à 4 lorsque ces instructions sont exécutées par le processeur 4. Le module de mémorisation 6 est par exemple en pratique un disque dur ou une mémoire non-volatile, éventuellement réinscriptible (par exemple de type EEPROM pour "Electrically Erasable and Programmable Read-Only Memory").

La mémoire vive 8 peut quant à elle mémoriser certains au moins des éléments (notamment les scalaires et les points d'une courbe elliptique) manipulés lors des différents traitements effectués au cours d'au moins un des procédés décrits en référence aux figures 3 à 4.

Le dispositif électronique 2 comporte également un ensemble de blocs (non représentés), par exemple un bloc de détermination d'un premier point de signature, un bloc de détermination d'une partie de signature, un bloc de détermination d'un deuxième scalaire intermédiaire et un bloc de détermination d'un deuxième point de signature. Ces blocs peuvent en pratique être réalisés par une combinaison d'éléments matériels et d'éléments logiciels. Chaque bloc possède une fonctionnalité décrite dans les procédés conformes à l'invention et exposés ci-après. Ainsi, pour chaque bloc, le dispositif électronique 2 mémorise par exemple des instructions de logiciel exécutables par le processeur 4 du dispositif électronique 2 afin d'utiliser un élément matériel (par exemple une interface de communication ou une mémoire) et de mettre ainsi en oeuvre la fonctionnalité offerte par le bloc.

Selon une possibilité de réalisation, les instructions de programme d'ordinateur mémorisées dans le module de mémorisation 6 ont par exemple été reçues (par exemple d'un ordinateur distant) lors d'une phase de fonctionnement du dispositif électronique 2 antérieure aux procédés décrits en référence aux figures 3 à 4.

L'invention s'applique en particulier lorsque le dispositif électronique 2 n'est pas sécurisé et qu'un attaquant peut donc avoir accès au fonctionnement interne du dispositif électronique 2, et ainsi aux traitements effectués par le processeur 4 et aux données manipulées lors de ces traitements. (C'est le cadre de la cryptographie en boîte blanche mentionnée en introduction.)

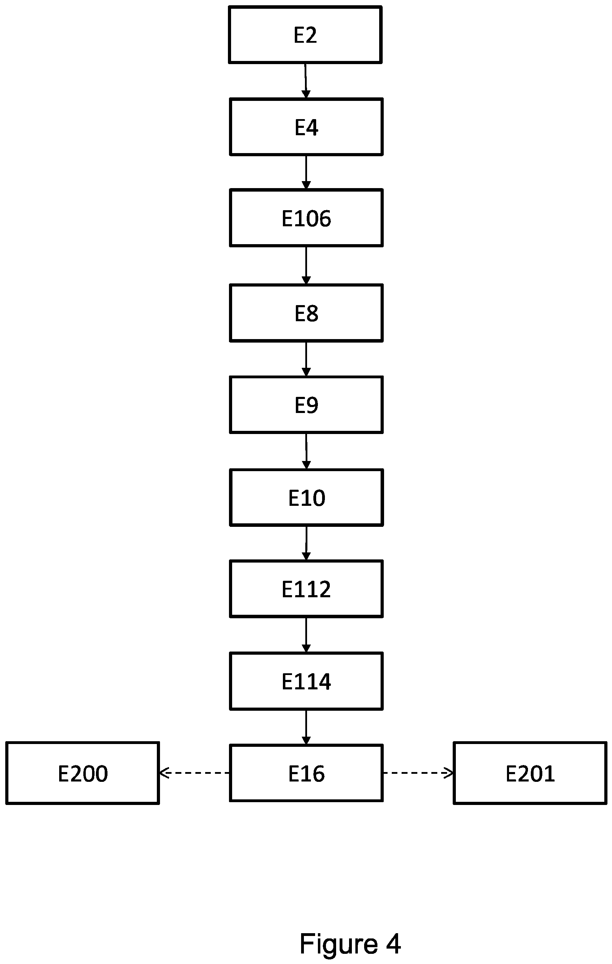

Le module de communication 10 est relié au processeur 4 de manière à permettre au processeur 4 de recevoir des données en provenance d'un autre dispositif électronique (non représenté) et/ou d'émettre des données à destination d'un autre dispositif électronique (non représenté). Dans certains modes de réalisation, le processeur 4 peut ainsi recevoir une donnée m de l'autre dispositif électronique et /ou émettre d'autres données, par exemple un résultat d'au moins un des procédés décrits en référence aux figures 3 et 4, typiquement la signature de la donnée m, à destination de l'autre entité électronique. Chaque figure parmi les figures 3 et 4, représente un procédé de signature cryptographique d'une donnée conforme à l'invention.

Chacun de ces procédés de traitement cryptographique est ici mis en oeuvre par le dispositif électronique 2 (du fait de l'exécution des instructions de programme d'ordinateur mémorisées dans le module de mémorisation 6 comme indiqué ci-dessus).

Chacun de ces procédés met en oeuvre des opérations dans un groupe Gr fini d'ordre n de points d'une courbe elliptique E. Ce groupe Gr est muni d'une opération d'addition de deux points de la courbe elliptique E, ci-après évoquée en tant qu'opération. La courbe elliptique E est définie par un ensemble de paramètres comprenant un point du groupe Gr appelé point générateur G. Ce point générateur est donc prédéterminé et peut être en pratique mémorisé dans le dispositif électronique 2, par exemple dans son module de mémorisation 6. Tout point du groupe Gr peut être associé de façon univoque à un ensemble de c coordonnées affines dans un repère d'un espace de dimension c.

En outre, chacun de ces procédés met en oeuvre des opérations algébriques (addition, multiplication, soustraction) sur des scalaires, ci-après évoquées en tant qu'addition, produit et soustraction.

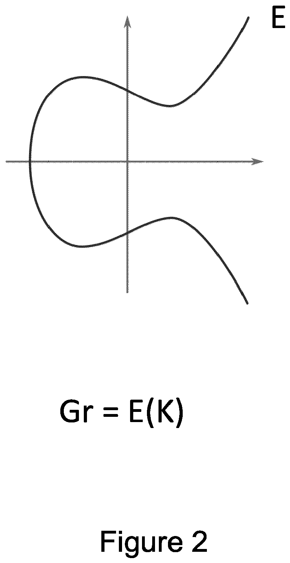

La figure 2 représente un exemple de courbe elliptique E dans un repère affine de dimension 2, et un exemple d'un groupe Gr de points de la courbe elliptique E définie sur un corps K.

L'invention ne se limite pas à cet exemple de courbe elliptique et de groupe Gr. Selon d'autres exemples, la courbe elliptique E peut avoir une autre forme dans ce repère, ou la courbe elliptique E peut être définie dans un autre repère et/ou un autre espace, notamment de dimension supérieure à 2.

La figure 3 montre les étapes principales d'un procédé de signature cryptographique d'une donnée selon un premier mode d'implémentation de l'invention.

Le procédé de la figure 3 vise à déterminer la signature d'une donnée m, par exemple reçue via le module de communication 10, au moyen d'une clé privée d et d'un algorithme de type ECDSA.

Selon une étape d'initialisation E2, le processeur 4 détermine un premier scalaire de dérivation $t_1$ et un deuxième scalaire de dérivation $t_0$. Le premier scalaire de dérivation $t_1$ et le deuxième scalaire de dérivation $t_0$ peuvent être chacun déterminé par tirage aléatoire, par application d'un algorithme pseudo aléatoire, par exemple à la donnée m, ou par lecture d'une mémoire du dispositif électronique 2, par exemple si le premier scalaire de dérivation $t_1$ et/ou le deuxième scalaire de dérivation $t_0$ ont été préalablement déterminés puis mémorisés dans le module de mémorisation 6.

Le deuxième scalaire de dérivation $t_0$ a de préférence une valeur modulo l'ordre n du groupe Gr, qui est strictement supérieure à un.

Le procédé comprend alors une étape de détermination d'un premier point générateur dérivé $T_0$ (étape E4) égal à la combinaison au moyen de l'opération du groupe Gr, d'éléments égaux au point générateur G de la courbe elliptique E et en nombre égal au deuxième scalaire de dérivation $t_0$, par exemple en multipliant le point générateur G par le deuxième scalaire de dérivation $t_0$.

On note ceci : $T_0 = [t_0] G$ .

L'étape de détermination d'un premier point générateur dérivé (étape E4) peut déterminer le premier point générateur dérivé $T_0$ par calcul à partir du deuxième scalaire de dérivation $t_0$ et du point générateur G, ou par lecture d'une mémoire du dispositif électronique 2, par exemple si le premier point générateur dérivé $T_0$ a été préalablement calculé et mémorisé dans son module de mémorisation 6.

Le procédé comprend également une étape de détermination d'un deuxième point générateur dérivé $T_1$ (étape E6) égal à la combinaison au moyen de l'opération du groupe Gr, d'éléments égaux au point générateur G de la courbe elliptique E et en nombre égal au premier scalaire de dérivation $t_1$, par exemple en multipliant le point générateur G par le premier scalaire de dérivation $t_1$ : $T_1 = [t_1] G$.

L'étape de détermination d'un deuxième point générateur dérivé (étape E6) peut déterminer le deuxième point générateur dérivé $T_1$ par calcul à partir du premier scalaire de dérivation $t_1$ et du point générateur G, ou par lecture d'une mémoire du dispositif électronique 2, par exemple si le deuxième point générateur dérivé $T_1$ a été préalablement calculé et mémorisé dans le module de mémorisation 6.

Le procédé comprend alors une étape de détermination d'un premier scalaire intermédiaire (étape E8) pendant laquelle le processeur 4 détermine ledit premier scalaire intermédiaire k, par exemple par tirage aléatoire ou par application d'un algorithme pseudo aléatoire, typiquement à la donnée m.

Le procédé comprend également une étape de détermination d'un troisième scalaire intermédiaire (étape E9) pendant laquelle le processeur 4 détermine ledit troisième scalaire intermédiaire k", par exemple par tirage aléatoire ou par application d'un algorithme pseudo aléatoire, typiquement à la donnée m. De préférence, le troisième scalaire intermédiaire (k") vaut un. Ainsi les calculs mis en oeuvre par le procédé sont d'allégés sans diminuer la robustesse dudit procédé.

Le procédé comprend alors une étape de détermination d'un premier point de signature $R_1$ (étape E10) égal à la combinaison au moyen de l'opération du groupe Gr, d'éléments égaux au premier point générateur dérivé $T_0$ de la courbe et en nombre égal au premier scalaire intermédiaire k, par exemple en multipliant le premier point générateur dérivé $T_0$ par le premier scalaire intermédiaire k : $R_1 = [k] T_0$.

Le choix d'un deuxième scalaire de dérivation $t_0$ supérieur à 1, permet d'être efficace contre des attaques par canal auxiliaire et rétro ingénierie car la détermination du premier point de signature $R_1$ est par combinaison d'éléments égaux à un premier point générateur dérivé $T_0$ qui est différent du point générateur G, lequel est généralement connu du public.

Le procédé comprend alors une étape de détermination d'un deuxième scalaire intermédiaire (étape E12) pendant laquelle le deuxième scalaire intermédiaire k' est déterminé en additionnant à un scalaire résultat d'un produit du premier scalaire intermédiaire k et du deuxième scalaire de dérivation $t_0$, un scalaire résultat d'un produit du premier scalaire de dérivation $t_1$ et du troisième scalaire intermédiaire k". Le deuxième scalaire intermédiaire k' vaut donc $k.t_0 + k".t_1$ .

Selon une variante de l'étape de détermination d'un deuxième scalaire intermédiaire (étape E12), le deuxième scalaire intermédiaire k' est déterminé en soustrayant à un scalaire résultat d'un produit du premier scalaire intermédiaire k et du deuxième scalaire de dérivation $t_0$, un scalaire résultat d'un produit du premier scalaire de dérivation $t_1$ et du troisième scalaire intermédiaire k". Le deuxième scalaire intermédiaire k' vaut donc dans cette variante de l'étape $k.t_0 - k".t_1$.

Ainsi, pendant l'étape de détermination d'un deuxième scalaire intermédiaire (étape E12), un deuxième scalaire intermédiaire k' est déterminé en additionnant ou soustrayant à un scalaire résultat d'un produit du premier scalaire intermédiaire k et d'un scalaire sélectionné, un scalaire résultat d'un produit d'un premier scalaire de dérivation $t_1$ et d'un troisième scalaire intermédiaire k", le scalaire sélectionné étant le deuxième scalaire de dérivation $t_0$.

Le procédé comprend également une étape de détermination d'un deuxième point de signature $R_0$ (étape E14) égal à la combinaison au moyen de l'opération du groupe Gr, d'éléments égaux au point générateur G de la courbe et en nombre égal au deuxième scalaire intermédiaire k' et d'autres éléments égaux à l'opposé du deuxième point générateur dérivé $T_1$ pour ladite opération et en nombre égal au troisième scalaire intermédiaire k", par exemple en multipliant le point générateur G par le deuxième scalaire intermédiaire k' et en multipliant par le troisième scalaire intermédiaire k" l'opposé du deuxième point générateur dérivé $T_1$, puis en additionnant dans le groupe Gr le résultat de chacune de ces multiplications : $R_0 = [k'] G - [k"] T_1$.

Selon une variante de l'étape de détermination d'un deuxième point de signature (étape E14), le deuxième point de signature $R_0$ est déterminé par combinaison au moyen de l'opération du groupe Gr, d'éléments égaux au point générateur G de la courbe et en nombre égal au deuxième scalaire intermédiaire k' et d'autres éléments égaux au deuxième point générateur dérivé $T_1$ et en nombre égale au troisième scalaire intermédiaire k", par exemple en multipliant le point générateur G par le deuxième scalaire intermédiaire k' et en multipliant par le troisième scalaire intermédiaire k" le deuxième point générateur dérivé $T_1$, puis en additionnant dans le groupe Gr le résultat de chacune de ces multiplications : $R_0 = [k'] G + [k"] T_1$.

Ainsi, l'étape de détermination d'un deuxième point de signature (étape E14) détermine un deuxième point de signature $R_0$ égal à la combinaison au moyen de ladite opération, d'éléments égaux à un point sélectionné de la courbe et en nombre égal au deuxième scalaire intermédiaire k', et d'autres éléments égaux à un point parmi un deuxième point générateur dérivé $T_1$ ou l'opposé du deuxième point générateur dérivé $T_1$ pour ladite opération et en nombre égale au troisième scalaire intermédiaire k", le point sélectionné étant le point générateur G.

La variante de l'étape de détermination d'un deuxième point de signature (étape E14) est typiquement utilisée quand l'étape de détermination d'un deuxième scalaire intermédiaire (étape E12) est implémentée selon sa variante qui a été décrite plus tôt.

Enfin, le procédé comprend une étape de détermination d'une partie de signature (étape E16) qui détermine une partie de signature s à partir de 1a clé privée d, du premier scalaire intermédiaire k, d'une coordonnée affine $r_1$ (typiquement une coordonnée affine selon une dimension prédéterminée dans un repère affine d'un espace affine prédéterminé) du premier point de signature $R_1$ et de la donnée m.

Par exemple, dans le contexte de l'algorithme de signature ECDSA, la partie de signature s est égale, modulo l'ordre du groupe Gr, au scalaire résultat du produit de l'inverse multiplicatif du premier scalaire intermédiaire k, de l'inverse multiplicatif du deuxième scalaire de dérivation $t_0$ et d'un scalaire de signature intermédiaire, ledit scalaire de signature intermédiaire étant égal à la somme d'un condensat e de la donnée m par une fonction de hachage H et d'un scalaire résultat d'un produit de la coordonnée affine $r_1$ (typiquement une coordonnée affine selon une première dimension prédéterminée dans un repère affine d'un espace prédéterminé) du premier point de signature et de la clé privée d. Autrement dit : $s = (k.t_0)^{-1}.(e+r_1.d) \bmod n$ avec e=H(m). La fonction de hachage H est typiquement un algorithme SHA-1, SHA-224, SHA-256, SHA-384, SHA-512, SHA3-224, SHA3-256, SHA3-384 ou SHA3-512.

A l'issu du procédé de la figure 3, le dispositif électronique 2 dispose donc de la signature de la donnée m par l'algorithme ECDSA au moyen de la clé privée d, à savoir la partie de signature s et une autre partie de signature déterminée à partir d'une coordonnée affine $r_0$ (typiquement selon une deuxième dimension prédéterminée dans le repère affine de l'espace prédéterminé, par exemple la première dimension décrite précédemment) du deuxième point de signature $R_0$. Ici l'autre partie de signature est la coordonnée affine $r_0$ du deuxième point de signature $R_0$.

L'attaque mentionnée en introduction ne peut plus être menée. En effet, l'attaquant a besoin de connaître la valeur de la coordonnée affine fautée qui est utilisée dans le calcul de la partie de signature. Le premier point de signature et le deuxième point de signature sont calculés de deux manières différentes. Il faudrait donc que l'attaquant injecte deux fois la même faute, une fois dans le calcul de la coordonnée affine du premier point de signature et une autre fois dans le calcul de la coordonnée affine du deuxième point de signature. En implémentant différemment ces deux calculs, l'attaque devient impossible.

De préférence, si le scalaire sélectionné vaut un, le troisième scalaire intermédiaire (k") a une valeur non nulle.

Un homme du métier comprendra que les étapes de ce procédé peuvent être exécutées selon d'autres ordres dans la mesure où chaque étape dispose des éléments (par exemple scalaires et/ou points de la courbe elliptique) nécessaires à son exécution.

Selon un premier exemple, les étapes de détermination d'un premier point générateur dérivé (étape E4) et de détermination d'un deuxième point générateur dérivé (étape E6) peuvent être exécutées dans un ordre arbitraire.

Selon un deuxième exemple, l'étape d'initialisation (étape E2) peut être effectuée après l'étape de détermination d'un premier point générateur dérivé (étape E4) et/ou après l'étape de détermination d'un deuxième point générateur dérivé (étape E6), notamment quand la détermination du premier point générateur dérivé $T_0$ et/ou du deuxième point générateur dérivé $T_1$ est par lecture d'une mémoire du dispositif électronique 2.

Selon un troisième exemple, les étapes de détermination d'un premier scalaire intermédiaire (étape E8) et de détermination d'un troisième scalaire intermédiaire (étape E9) peuvent être exécutées dans un ordre arbitraire. L'étape de détermination d'un premier scalaire intermédiaire (étape E8) et /ou l'étape de détermination d'un troisième scalaire intermédiaire (étape E9) peuvent être exécutées avant l'une quelconque des étapes E2 à E6.

Selon un quatrième exemple, l'étape de détermination d'un premier point de signature (étape E10) peut être effectuée à tout moment après l'étape de détermination d'un premier point générateur dérivé (étape E4) et l'étape de détermination d'un premier scalaire intermédiaire (étape E8), mais avant l'étape de détermination d'une partie de signature (étape E16).

Selon un cinquième exemple, l'étape de détermination d'un deuxième point de signature (étape E14) peut être effectuée à tout moment après l'étape de détermination d'un deuxième point générateur dérivé (étape E6) et l'étape de détermination d'un deuxième scalaire intermédiaire (étape E12).

Selon un dernier exemple, l'étape de détermination d'une partie de signature (étape E16) peut être effectuée à tout moment après l'étape de détermination d'un premier point de signature (étape E10).

La figure 4 représente sous forme de logigramme un procédé de signature cryptographique d'une donnée selon un autre mode d'implémentation de l'invention.

Le procédé de la figure 4 vise aussi à déterminer la signature d'une donnée m, par exemple reçue via le module de communication 10, au moyen d'une clé privée d et d'un algorithme de type ECDSA.

Le procédé de la figure 4 comprend une étape d'initialisation E2 identique à l'étape d'initialisation E2 du premier mode de réalisation.

Le procédé comprend alors une étape de détermination d'un premier point générateur dérivé $T_0$ (étape E4) identique à celle du premier mode d'implémentation.

Le procédé comprend également une étape de détermination d'un deuxième point générateur dérivé $T_1$ (étape E106) égal à la combinaison au moyen de l'opération du groupe Gr, d'éléments égaux au premier point générateur dérivé $T_0$ de la courbe elliptique E et en nombre égal au premier scalaire de dérivation $t_1$.

Par exemple, l'étape de détermination d'un deuxième point générateur est en multipliant le premier point générateur dérivé $T_0$ par le premier scalaire de dérivation $t_1$, ou selon un autre exemple, en multipliant le point générateur G par le scalaire résultat d'un produit du premier scalaire de dérivation $t_1$ et du deuxième scalaire de dérivation $t_0$ : $T_1 = [t_1.t_0] G = [t_1] T_0$.

Cette étape de détermination d'un deuxième point générateur dérivé peut déterminer le deuxième point générateur dérivé $T_1$ par calcul à partir du premier scalaire de dérivation $t_1$ et du premier point générateur dérivé $T_0$, ou par calcul à partir du premier scalaire de dérivation $t_1$, du deuxième scalaire de dérivation $t_0$ et du point générateur G, ou par lecture d'une mémoire du dispositif électronique 2, par exemple si le deuxième point générateur dérivé $T_1$ a été préalablement calculé et mémorisé dans son module de mémorisation 6.

Le procédé comprend alors une étape de détermination d'un premier scalaire intermédiaire (étape E8), une étape de détermination d'un troisième scalaire intermédiaire (étape E9), et alors une étape de détermination d'un premier point de signature $R_1$ (étape E10), identiques à celles décrites pour le premier mode d'implémentation.

Le procédé comprend alors une étape de détermination d'un deuxième scalaire intermédiaire (étape E112) pendant laquelle le deuxième scalaire intermédiaire k' est déterminé en additionnant au premier scalaire intermédiaire k, un scalaire résultat du produit du premier scalaire de dérivation $t_1$ et du troisième scalaire intermédiaire k". Le deuxième scalaire intermédiaire k' vaut donc k + k".$t_1$ .

Selon une variante pour cette étape de détermination d'un deuxième scalaire intermédiaire (étape E112), le deuxième scalaire intermédiaire k' est déterminé en soustrayant au premier scalaire intermédiaire k, un scalaire résultat d'un produit du premier scalaire de dérivation $t_1$ et du troisième scalaire intermédiaire k". Le deuxième scalaire intermédiaire k' vaut donc dans cette variante de l'étape k - k".$t_1$.

Ainsi, pendant cette de détermination d'un deuxième scalaire intermédiaire (étape E112), un deuxième scalaire intermédiaire k' est déterminé en additionnant ou soustrayant à un scalaire résultat d'un produit du premier scalaire intermédiaire k et d'un scalaire sélectionné, un scalaire résultat d'un produit d'un premier

scalaire de dérivation $t_1$ et d'un troisième scalaire intermédiaire k", le scalaire sélectionné ayant pour valeur 1. Le procédé comprend également une étape de détermination d'un deuxième point de signature $R_0$ (étape E114) égal à la combinaison au moyen de l'opération du groupe Gr, d'éléments égaux au premier point générateur dérivé $T_0$ de la courbe et en nombre égal au deuxième scalaire intermédiaire k' et d'autres éléments égaux à l'opposé du deuxième point générateur dérivé $T_1$ pour ladite opération et en nombre égal au troisième scalaire intermédiaire k", par exemple en multipliant le premier point générateur dérivé $T_0$ par le deuxième scalaire intermédiaire k' et en multipliant par le troisième scalaire intermédiaire k" l'opposé du deuxième point générateur dérivé $T_1$, puis en additionnant dans le groupe Gr le résultat de chacune de ces multiplications :

$$R_0 = [k'] \, T_0 - [k''] \, T_1.$$

Selon une variante pour cette étape de détermination d'un deuxième point de signature (étape E114), le deuxième point de signature $R_0$ est déterminé par combinaison au moyen de l'opération du groupe Gr, d'éléments égaux au premier point générateur dérivé $T_0$ de la courbe et en nombre égal au deuxième scalaire intermédiaire k' et d'autres éléments égaux au deuxième point générateur dérivé $T_1$ et en nombre égal au troisième scalaire intermédiaire k", par exemple en multipliant le premier point générateur dérivé $T_0$ par le deuxième scalaire intermédiaire k' et en multipliant par le troisième scalaire intermédiaire k" le deuxième point générateur dérivé $T_1$, puis en additionnant dans le groupe Gr le résultat de chacune de ces multiplications : $R_0 = [k'] \, T_0 + [k''] \, T_1$.

Ainsi, cette étape de détermination d'un deuxième point de signature (étape E114) détermine un deuxième point de signature $R_0$ égal à la combinaison au moyen de ladite opération, d'éléments égaux à un point sélectionné de la courbe et en nombre égal au deuxième scalaire intermédiaire k', et d'autres éléments égaux à un point parmi un deuxième point générateur dérivé $T_1$ ou l'opposé du deuxième point générateur dérivé $T_1$ pour ladite opération et en nombre égale au troisième scalaire intermédiaire k", le point sélectionné étant le premier point générateur dérivé $T_0$.

La variante de cette étape de détermination d'un deuxième point de signature (étape E114) est typiquement utilisée quand l'étape de détermination d'un deuxième scalaire intermédiaire (étape E112) est implémentée selon sa variante qui a été décrite plus tôt. Enfin, le procédé comprend une étape de détermination d'une partie de signature (étape E16) identique à celle du premier mode d'implémentation.

A l'issu du procédé de la figure 4, le dispositif électronique 2 dispose donc de la signature de la donnée m par l'algorithme ECDSA au moyen de la clé privée d, à savoir la partie de signature s et une autre partie de signature déterminée à partir d'une coordonnée affine $r_0$ (typiquement selon une deuxième dimension prédéterminée dans le repère affine de l'espace prédéterminé, par exemple la première dimension décrite pour la coordonnée affine $r_1$ du premier point de signature $R_1$ à l'étape de détermination d'une partie de signature E16) du deuxième point de signature $R_0$. Ici l'autre partie de signature est la coordonnée affine $r_0$ du deuxième point de signature $R_0$.

L'attaque mentionnée en introduction ne peut plus être menée. En effet, l'attaquant a besoin de connaître la valeur de la coordonnée affine fautée qui est utilisée dans le calcul de la partie de signature. Le premier point de signature et le deuxième point de signature sont calculés de deux manières différentes. Il faudrait donc que l'attaquant injecte deux fois la même faute, une fois dans le calcul de la coordonnée affine du premier point de signature et une autre fois dans le calcul de la coordonnée affine du deuxième point de signature. En implémentant différemment ces deux calculs, l'attaque devient impossible.

De préférence, le scalaire sélectionné valant un, le troisième scalaire intermédiaire (k") a une valeur non nulle.

Un homme du métier comprendra que les étapes de ce procédé peuvent être exécutées selon d'autres ordres dans la mesure où chaque étape dispose des éléments (par exemple scalaires et/ou points de la courbe elliptique) nécessaires à son exécution.

Selon un premier exemple, l'étape de détermination d'un deuxième point générateur dérivé (étape E106) peut être exécutée avant l'étape de détermination d'un premier point générateur dérivé (étape E4), quand le deuxième point générateur dérivé $T_1$ est déterminé par calcul à partir du premier scalaire de dérivation $t_1$, du deuxième scalaire de dérivation $t_0$ et du point générateur G, ou par lecture d'une mémoire du dispositif électronique 2.

Selon un deuxième exemple, l'étape d'initialisation (étape E2) peut être effectuée après l'étape de détermination d'un premier générateur dérivé (étape E4) et/ou après l'étape de détermination d'un deuxième point générateur dérivé (étape E6), notamment quand la détermination du premier point générateur dérivé $T_0$ et/ou du deuxième point générateur dérivé $T_1$ est par lecture d'une mémoire du dispositif électronique 2.

Selon un troisième exemple, les étapes de détermination d'un premier scalaire intermédiaire (étape E8) et de détermination d'un troisième scalaire intermédiaire (étape E9) peuvent être exécutées dans un ordre arbitraire. L'étape de détermination d'un premier scalaire intermédiaire (étape E8) et /ou l'étape de détermination d'un troisième scalaire intermédiaire (étape E9) peuvent être exécutées avant l'une quelconque des étapes d'initialisation (étape E2), de détermination d'un premier point générateur dérivé (étape E4) et de détermination d'un deuxième point générateur dérivé (étape E106).

Selon un quatrième exemple, l'étape de détermination d'un premier point de signature (étape E10) peut être effectuée à tout moment après l'étape de détermination d'un premier point générateur dérivé (étape E4) et l'étape de détermination d'un premier scalaire intermédiaire (étape E8).

Selon un cinquième exemple, l'étape de détermination d'un deuxième point de signature (étape E114) peut être effectuée à tout moment après les étapes de détermination d'un premier point générateur dérivé (étape E4), de détermination d'un deuxième point générateur dérivé (étape E106) et de détermination d'un deuxième scalaire intermédiaire (étape E112).

Selon un dernier exemple, l'étape de détermination d'une partie de signature (étape E16) peut être effectuée à tout moment après l'étape de détermination d'un premier point de signature (étape E10).

On a décrit ci-dessus deux modes de réalisation d'un procédé de signature cryptographique ECDSA d'une donnée selon l'invention.

En variante, ces modes de réalisation peuvent être adaptés pour une signature cryptographique de la donnée au moyen d'un algorithme de type EdDSA. Dans ce cas, l'étape de détermination d'une partie de signature (étape E16) détermine aussi une partie de signature s à partir de la clé privée d, du premier scalaire intermédiaire k, de la coordonnée affine $r_1$ (typiquement une coordonnée affine selon une première dimension prédéterminée dans un repère affine d'un espace prédéterminé) du premier point de signature $R_1$ et de la donnée m. Mais dans cette variante, cette étape de détermination d'une partie de signature (étape E16) détermine une partie de signature s qui est égale, modulo l'ordre n du groupe Gr, à la somme du premier scalaire intermédiaire k et d'un scalaire résultat d'un produit de la clé privée d et d'un condensat d'une donnée intermédiaire m' par une fonction de hachage H, la dite donnée intermédiaire m' étant la concaténation de la coordonnée affine $r_1$ du premier point de signature, d'une autre coordonnée affine $r_{y1}$ (typiquement une coordonnée affine selon une première autre dimension prédéterminée qui est différente de la première dimension prédéterminée dans le repère affine de l'espace prédéterminé) du premier point de signature, de deux coordonnées affines q et $q_y$ (typiquement respectivement une coordonnée affine selon la première dimension prédéterminée et la première autre dimension prédéterminée dans le repère affine de l'espace prédéterminé) d'un autre point Q de la courbe E, et de la donnée m. Autrement dit : $s = k+d.H(r_1|ry_1|q|q_y|m) \bmod n$. La fonction de hachage H est typiquement un algorithme SHA-512 ou SHAKE256.

Les procédés des figures 3 et 4 ainsi adaptés peuvent être complétés par une étape de détermination d'une autre partie de signature u (étape E200) qui détermine l'autre partie de signature u par concaténation d'une coordonnée affine $r_0$ (typiquement selon une deuxième dimension prédéterminée dans le repère affine de l'espace prédéterminé, par exemple la première dimension prédéterminée) du deuxième point de signature $R_0$ et d'une autre coordonnée affine $r_{y0}$ (typiquement selon une deuxième autre dimension prédéterminée dans le repère affine de l'espace prédéterminé, par exemple la première autre dimension prédéterminée) du deuxième point de signature $R_0$. Autrement dit : $u = r_0|r_{y0}$.

A l'issu du procédé de la figure 3 ou du procédé de la figure 4, le dispositif électronique 2 dispose donc de la signature de la donnée m par l'algorithme EdDSA au moyen de la clé privée d, à savoir la partie de signature s décrite ci-avant et l'autre partie de signature u déterminée par l'étape de détermination d'une autre partie de signature (étape E200) à partir d'une coordonnée affine $r_0$ du deuxième point de signature $R_0$.

Selon une autre variante, les deux modes de réalisation décrit en référence des figures 3 et 4 peuvent être adaptés pour une signature cryptographique de la donnée m au moyen d'un algorithme de type signature de Schnorr. Dans ce cas, l'étape de détermination d'une partie de signature E16 détermine aussi une partie de signature s à partir de la clé privée d, du premier scalaire intermédiaire k, de la coordonnée affine $r_1$ (typiquement une coordonnée affine selon une première dimension prédéterminée dans un repère affine d'un espace prédéterminé) du premier point de signature $R_1$ et de la donnée m. Mais dans cette autre variante, l'étape de détermination d'une partie de signature E16 détermine une partie de signature s qui est égale, modulo l'ordre n du groupe Gr, à la somme du premier scalaire intermédiaire k et d'un scalaire résultat d'un produit de la clé privée d et d'un condensat d'une donnée intermédiaire m' par une fonction de hachage H, la dite donnée intermédiaire m'étant la concaténation de la coordonnée affine $r_1$ du premier point de signature, d'une autre coordonnée affine $r_{y1}$ (typiquement une coordonnée affine selon une première autre dimension prédéterminée qui est différente de la première dimension prédéterminée dans le repère affine de l'espace prédéterminé) du premier point de signature $R_1$, et de la donnée m. Autrement dit : $s = k+d.H(r_1|r_{y1}|m) \bmod n$. La fonction de hachage H est typiquement un algorithme SHA-1, SHA-224, SHA-256, SHA-384, SHA-512, SHA3-224, SHA3-256, SHA3-384 ou SHA3-512 dont le résultat peut être éventuellement tronqué.

Les procédés des figures 3 et 4 ainsi adaptés peuvent être complétés par une autre étape de détermination d'une autre partie de signature u (étape E201) dans laquelle l'autre partie de signature u est déterminée par application de la fonction de hachage H à la concaténation d'une coordonnée affine $r_0$ (typiquement selon une deuxième dimension prédéterminée dans le repère affine de l'espace prédéterminé, par exemple la première dimension prédéterminée) du deuxième point de signature $R_0$, d'une autre coordonnée affine $r_{y0}$ (typiquement selon une deuxième autre dimension prédéterminée dans le repère affine de l'espace prédéterminé, par exemple la première autre dimension prédéterminée) du deuxième point de signature $R_0$, et de la donnée m. Autrement dit : $u = H(r_0|r_{y0}|m)$.

A l'issu du procédé de la figure 3 ou du procédé de la figure 4, le dispositif électronique 2 dispose donc de la signature de la donnée m par l'algorithme de signature de Schnorr au moyen de la clé privée d, à savoir la partie de signature s décrite ci-avant et l'autre partie de signature u déterminée par l'autre étape de détermination d'une autre partie de signature (étape E201) à partir d'une coordonnée affine $r_0$ du deuxième point de signature $R_0$.

Comme déjà évoqué, l'homme du métier comprendra que les étapes de chaque procédé peuvent être exécutées selon d'autres ordres dans la mesure où chaque étape dispose des éléments (par exemple scalaires et/ou points de la courbe elliptique) nécessaires à son exécution.

Ainsi, on notera pour que l'étape de détermination d'une autre partie de signature E200 et l'autre étape de détermination d'une autre partie de signature E201 peuvent être exécutées à tout moment après l'étape de détermination d'un deuxième point de signature (étape E14) du procédé décrit en référence à la figure 3 ou l'étape de détermination d'un deuxième point de signature (étape E114) du procédé décrit en référence à la figure 4. On notera qu'avec ces variantes de réalisation d'une signature cryptographique de la donnée au moyen d'un algorithme de type EdDSA ou d'un algorithme Schnorr, l'attaque mentionnée en introduction ne peut plus être menée. En effet, l'attaquant a besoin de connaître la valeur des coordonnées affines fautées du point de signature qui est utilisé dans le calcul de la partie de signature. Le premier point de signature et le deuxième point de signature sont calculés de deux manières différentes. Il faudrait donc que l'attaquant injecte deux fois la même faute, une fois dans le calcul des deux coordonnées affines du premier point de signature et une autre fois dans le calcul des deux coordonnées affines du deuxième point de signature. En implémentant différemment ces deux calculs, l'attaque devient impossible.

De préférence, si le scalaire sélectionné vaut un, le troisième scalaire intermédiaire (k") a une valeur non nulle.

Quel que soit le mode et/ou la variante de réalisation, on notera que les calculs impliqués dans le traitement de points sur la courbe elliptique E sont généralement eux-mêmes réalisés par la mise en oeuvre d'opérations (additions, soustractions et produits) dans un autre corps fini sur une ou plusieurs coordonnées du ou des points concernés (par exemple pour chaque point, une ou plusieurs coordonnées affines, et pas nécessairement les coordonnées affines selon toutes les dimensions du repère affine associé, ou selon un autre exemple pour chaque point, une ou plusieurs coordonnées projectives et pas nécessairement les coordonnées projectives selon toutes les dimensions du repère projectif associé).

Enfin, quel que soit le mode et/ou la variante de réalisation du procédé de signature cryptographique d'une donnée selon l'invention, l'étape de détermination du premier point de signature $R_1$ et l'étape de détermination de la partie de signature s peuvent être implémentées en boite blanche.

Ainsi, le procédé est résistant à l'attaque mentionnée dans l'art antérieure quand le procédé est mis en oeuvre dans un dispositif non sécurisé.

De préférence, seules l'étape de détermination du premier point de signature $R_1$ et l'étape de détermination de la partie de signature s sont implémentées en boite blanche. Ainsi, le procédé est résistant à l'attaque mentionnée dans l'art antérieure quand le procédé est mis en oeuvre dans un dispositif non sécurisé, tout en limitant la consommation mémoire dudit dispositif et les calculs associés à cette mise en oeuvre.

Un homme du métier comprendra que les modes de réalisation, variantes, et différentes caractéristiques, décrits ci-avant peuvent être associées les unes avec les autres selon diverses combinaisons dans la mesure où elles ne sont pas incompatibles ou exclusives les unes des autres.

**Revendications**

1. Procédé de signature cryptographique d'une donnée (m) mis en oeuvre au sein d'un dispositif électronique (2) à partir d'une clé privée (d) et d'un groupe fini de points d'une courbe elliptique (E), ledit groupe étant muni d'une opération d'addition de deux points de la courbe elliptique et comprenant un point générateur (G), le procédé comprenant les étapes suivantes :

   - détermination (E10) d'un premier point de signature ($R_1$) par la combinaison au moyen de ladite opération, d'éléments égaux à un premier point générateur dérivé ($T_0$) de la courbe et en nombre égal à un premier scalaire intermédiaire (k), et
   - détermination (E12,E112) d'un deuxième scalaire intermédiaire (k') en additionnant ou soustrayant à un scalaire résultat d'un produit du premier scalaire intermédiaire (k) et d'un scalaire sélectionné, un scalaire résultat d'un produit d'un premier scalaire de dérivation ($t_1$) et d'un troisième scalaire intermédiaire (k"),
   - détermination (E14,E114) d'un deuxième point de signature ($R_0$) par la combinaison au moyen de ladite opération, d'éléments égaux à un point sélectionné de la courbe et en nombre égal au deuxième scalaire intermédiaire (k'), et d'autres éléments égaux à un point parmi un deuxième point générateur dérivé ($T_1$) ou l'opposé du deuxième point générateur dérivé ($T_1$) pour ladite opération et en nombre égal au troisième scalaire intermédiaire (k"),
   - détermination (E16) d'une partie de signature (s) à partir de la clé privée (d), du premier scalaire intermédiaire (k), d'une coordonnée affine ($r_1$) du premier point de signature ($R_1$) et de la donnée (m),

et dans lequel :

- le premier point générateur dérivé ($T_0$) est égal à la combinaison au moyen de ladite opération, d'éléments égaux au point générateur (G) de la courbe et en nombre égal à un deuxième scalaire de dérivation ($t_0$),
- le deuxième point générateur dérivé ($T_1$) est égal à la combinaison au moyen de ladite opération, d'éléments égaux au point sélectionné de la courbe et en nombre égal au premier scalaire de dérivation ($t_1$),
- la signature de la donnée comprend la partie de signature (s) et une autre partie de signature déterminée à partir d'une coordonnée affine ($r_0$) du deuxième point de signature ($R_0$),
- le premier point de signature et le deuxième point de signature sont égaux,
- les autres éléments sont égaux au deuxième point générateur dérivé ($T_1$) et l'étape (E12, E112) de détermination du deuxième scalaire intermédiaire (k') est par soustraction, ou
- les autres éléments sont égaux à l'opposé dudit deuxième point générateur dérivé et l'étape (E12,E112) de détermination du deuxième scalaire intermédiaire (k') est par addition.

2. Procédé de signature cryptographique d'une donnée (m) selon la revendication précédente, dans lequel :

   - le scalaire sélectionné est le deuxième scalaire de dérivation ($t_0$) et le point sélectionné est le point générateur (G), ou
   - le scalaire sélectionné a pour valeur un et le point sélectionné est le premier point générateur dérivé ($T_0$).

3. Procédé de signature cryptographique d'une donnée (m) selon l'une quelconque des revendications précédentes, ledit procédé comprenant en outre les étapes suivantes :

   - détermination (E4) du premier point générateur dérivé ($T_0$) par combinaison au moyen de ladite opération, d'éléments égaux au point générateur (G) de la courbe et en nombre égal au deuxième scalaire de dérivation($t_0$),
   - détermination (E6,E106) du deuxième point générateur dérivé ($T_1$) par combinaison au moyen de ladite opération, d'éléments égaux au point sélectionné de la courbe et en nombre égal au premier scalaire de dérivation ($t_1$).

4. Procédé de signature cryptographique d'une donnée (m) selon l'une quelconque des revendications précédentes, dans lequel le deuxième scalaire de dérivation ($t_0$) et le premier scalaire de dérivation ($t_1$) sont chacun déterminés par tirage aléatoire ou par application d'un algorithme pseudo aléatoire à la donnée (m).

5. Procédé de signature cryptographique d'une donnée (m) selon l'une quelconque des revendications précédentes, dans lequel si le scalaire sélectionné vaut un, le troisième scalaire intermédiaire (k") a une valeur non nulle.

6. Procédé de signature cryptographique d'une donnée (m) selon l'une quelconque des revendications précédentes, dans lequel le premier scalaire intermédiaire (k) est déterminé par tirage aléatoire ou par application d'un algorithme pseudo aléatoire à la donnée (m).

7. Procédé de signature cryptographique d'une donnée (m) selon l'une quelconque des revendications précédentes, dans lequel le deuxième scalaire de dérivation ($t_0$) a une valeur strictement supérieure à un.

8. Procédé de signature cryptographique d'une donnée (m) selon l'une quelconque des revendications précédentes, dans lequel

   - la partie de signature (s) est égale, modulo l'ordre du groupe, au scalaire résultat d'un produit de l'inverse multiplicatif du premier scalaire intermédiaire (k), de l'inverse multiplicatif du deuxième scalaire de dérivation ($t_0$) et d'un scalaire de signature intermédiaire, ledit scalaire de signature intermédiaire étant égal à la somme d'un condensat de la donnée (m) par une fonction de hachage et d'un scalaire résultat d'un produit de la coordonnée affine ($r_1$) du premier point de signature et de la clé privée (d), et
   - l'autre partie de signature est la coordonnée affine ($r_0$) du deuxième point de signature ($R_0$).

9. Procédé de signature cryptographique d'une donnée (m) selon l'une quelconque des revendications 1 à 7,

   - dans lequel la partie de signature (s) est égale, modulo l'ordre du groupe, à la somme du premier scalaire intermédiaire (k) et d'un scalaire résultat d'un produit de la clé privée (d) et d'un condensat d'une donnée intermédiaire (m') par une fonction de hachage (H), la dite donnée intermédiaire étant la concaténation de la coordonnée affine ($r_1$) du premier point de signature, d'une autre coordonnée affine ($r_{y1}$) du premier point de signature, de deux coordonnées affines d'un autre point (Q) de la courbe et de la donnée (m), et

- comprenant en outre une étape (E200) de détermination de l'autre partie de signature par concaténation de la coordonnée affine $(r_0)$ du deuxième point de signature $(R_0)$ et d'une autre coordonnée affine $(r_{y0})$ du deuxième point de signature $(R_0)$.

10. Procédé de signature cryptographique d'une donnée (m) selon l'une quelconque des revendications 1 à 7,

- dans lequel la partie de signature (s) est égale, modulo l'ordre du groupe, à la somme du premier scalaire intermédiaire (k) et d'un scalaire résultat d'un produit de la clé privée (d) et d'un condensat d'une donnée intermédiaire (m') par une fonction de hachage (H), la dite donnée intermédiaire (m') étant 1a concaténation de la coordonnée affine $(r_1)$ du premier point de signature, d'une autre coordonnée affine $(r_{y1})$ du premier point de signature $(R_1)$, et de la donnée (m), et

- comprenant en outre une étape (E201) de détermination de l'autre partie de signature par application de la fonction de hachage (H) à la concaténation de la coordonnée affine $(r_0)$ du deuxième point de signature $(R_0)$, d'une autre coordonnée affine $(r_{y0})$ du deuxième point de signature $(R_0)$, et de la donnée (m).

11. Procédé de signature cryptographique d'une donnée (m) selon l'une quelconque des revendications précédentes dans lequel l'étape (E10) de détermination du premier point de signature $(R_1)$ et l'étape (E16) de détermination de la partie de signature (s) sont implémentées en boite blanche.

12. Procédé de signature cryptographique d'une donnée (m) selon la revendication 11 dans lequel seules l'étape (E10) de détermination du premier point de signature $(R_1)$ et l'étape (E16) de détermination de la partie de signature sont implémentées en boite blanche.

13. Programme d'ordinateur comprenant des instructions exécutables par un processeur et adaptées pour la mise en oeuvre d'un procédé selon l'une quelconque des revendications 1 à 12, lorsque ces instructions sont exécutées par le processeur.

14. Dispositif électronique (2) apte à mettre en oeuvre une signature cryptographique d'une donnée (m) à partir d'une clé privée (d) et d'un groupe fini de points d'une courbe elliptique (E), ledit groupe étant muni d'une opération d'addition de deux points de la courbe elliptique et comprenant un point générateur (G), ledit dispositif électronique comprenant

- un bloc de détermination d'un premier point de signature $(R_1)$ par la combinaison au moyen de ladite opération, d'éléments égaux à un premier point générateur dérivé $(T_0)$ de la courbe et en nombre égal à un premier scalaire intermédiaire (k), et

- un bloc de détermination d'une partie de signature (s) à partir de la clé privée (d), du premier scalaire intermédiaire (k), d'une coordonnée affine $(r_1)$ du premier point de signature $(R_1)$ et de la donnée (m),

- un bloc de détermination d'un deuxième scalaire intermédiaire (k') en additionnant ou soustrayant à un scalaire résultat d'un produit du premier scalaire intermédiaire (k) et d'un scalaire sélectionné, un scalaire résultat d'un produit d'un premier scalaire de dérivation $(t_1)$ et d'un troisième scalaire intermédiaire (k"),

- un bloc de détermination d'un deuxième point de signature $(R_0)$ par la combinaison au moyen de ladite opération, d'éléments égaux à un point sélectionné de la courbe et en nombre égal au deuxième scalaire intermédiaire (k'), et d'autres éléments égaux à un point parmi un deuxième point générateur dérivé $(T_1)$ ou l'opposé du deuxième point générateur dérivé $(T_1)$ pour ladite opération et en nombre égale au troisième scalaire intermédiaire (k"),

et dans lequel :

- le premier point générateur dérivé $(T_0)$ est égal à la combinaison au moyen de ladite opération, d'éléments égaux à un point générateur (G) de la courbe et en nombre égal à un deuxième scalaire de dérivation $(t_0)$,

- le deuxième point générateur dérivé $(T_1)$ est égal à la combinaison au moyen de ladite opération, d'éléments égaux au point sélectionné de la courbe et en nombre égal au premier scalaire de dérivation $(t_1)$, et

- la signature de la donnée comprend la partie de signature (s) et une autre partie de signature déterminée à partir d'une coordonnée affine $(r_0)$ du deuxième point de signature $(R_0)$,

- le premier point de signature et le deuxième point de signature sont égaux,

- les autres éléments sont égaux au deuxième point générateur dérivé $(T_1)$ et la détermination du deuxième scalaire intermédiaire (k') est par soustraction, ou

- les autres éléments sont égaux à l'opposé dudit deuxième point générateur dérivé et la détermination du deuxième scalaire intermédiaire (k') est par addition.

**Patentansprüche**

1. Verfahren zur kryptographischen Signatur eines Datenelements (m), das innerhalb einer elektronischen Vorrichtung (2) durchgeführt wird, anhand eines privaten Schlüssels (d) und einer endlichen Gruppe von Punkten einer elliptischen Kurve (E), wobei die Gruppe mit einer Operation zur Addition zweier Punkte der elliptischen Kurve versehen ist und einen erzeugenden Punkt (G) umfasst, wobei das Verfahren die folgenden Schritte umfasst:

   - Bestimmen (E10) eines ersten Signaturpunkts ($R_1$) durch die Kombination, mittels der Operation, von Elementen, die gleich einem ersten abgeleiteten erzeugenden Punkt ($T_0$) der Kurve und in der Zahl gleich einem ersten Zwischenskalar (k) sind, und
   - Bestimmen (E12, E112) eines zweiten Zwischenskalars (k') durch Addition oder Substraktion eines Skalars, der das Ergebnis eines Produkts eines ersten Ableitungsskalars ($t_1$) und eines dritten Zwischenskalars (k") ist, zu oder von einem Skalar, der das Ergebnis eines Produkts des ersten Zwischenskalars (k) und eines ausgewählten Skalars ist,
   - Bestimmen (E14, E114) eines zweiten Signaturpunkts ($R_0$) durch die Kombination, mittels der Operation, von Elementen, die gleich einem ausgewählten Punkt der Kurve und in der Zahl gleich dem zweiten Zwischenskalar (k') sind, und anderer Elemente, die gleich einem Punkt von einem zweiten abgeleiteten erzeugenden Punkt ($T_1$) oder dem Negativen des zweiten abgeleiteten erzeugenden Punkts ($T_1$) für die Operation und in der Zahl gleich dem dritten Zwischenskalar (k") sind,
   - Bestimmen (E16) eines Signaturabschnitts (s) anhand des privaten Schlüssels (d), des ersten Zwischenskalars (k), einer affinen Koordinate ($r_1$) des ersten Signaturpunkts ($R_1$) und des Datenelements (m),

   und wobei:

   - der erste abgeleitete erzeugende Punkt ($T_0$) gleich der Kombination, mittels der Operation, von Elementen ist, die gleich dem erzeugenden Punkt (G) der Kurve und in der Zahl gleich einem zweiten Ableitungsskalar ($t_0$) sind,
   - der zweite abgeleitete erzeugende Punkt ($T_1$) gleich der Kombination, mittels der Operation, von Elementen ist, die gleich dem ausgewählten Punkt der Kurve und in der Zahl gleich dem ersten Ableitungsskalar ($t_1$) sind,
   - die Signatur des Datenelements den Signaturabschnitt (s) und einen anderen Signaturabschnitt umfasst, der anhand einer affinen Koordinate ($r_0$) des zweiten Signaturpunkts ($R_0$) bestimmt wird,
   - der erste Signaturpunkt und der zweite Signaturpunkt gleich sind,
   - die anderen Elemente gleich dem zweiten abgeleiteten erzeugenden Punkt ($T_1$) sind und der Schritt (E12, E112) des Bestimmens des zweiten Zwischenskalars (k') durch Substraktion erfolgt, oder
   - die anderen Elemente gleich dem Negativen des zweiten abgeleiteten erzeugenden Punkts sind und der Schritt (E12, E112) des Bestimmens des zweiten Zwischenskalars (k') durch Addition erfolgt.

2. Verfahren zur kryptographischen Signatur eines Datenelements (m) nach dem vorhergehenden Anspruch, wobei:

   - der ausgewählte Skalar der zweite Ableitungsskalar ($t_0$) ist und der ausgewählte Punkt der erzeugende Punkt (G) ist, oder
   - der ausgewählte Skalar eins als Wert aufweist und der ausgewählte Punkt der erste abgeleitete erzeugende Punkt ($T_0$) ist.

3. Verfahren zur kryptographischen Signatur eines Datenelements (m) nach einem der vorhergehenden Ansprüche, wobei das Verfahren ferner die folgenden Schritte umfasst:

   - Bestimmen (E4) des ersten abgeleiteten erzeugenden Punkts ($T_0$) durch Kombination, mittels der Operation, von Elementen, die gleich dem erzeugenden Punkt (G) der Kurve und in der Zahl gleich dem zweiten Ableitungsskalar ($t_0$) sind,
   - Bestimmen (E6, E106) des zweiten abgeleiteten erzeugenden Punkts (T1) durch Kombination, mittels der Operation, von Elementen, die gleich dem ausgewählten Punkt der Kurve und in der Zahl gleich dem ersten Ableitungsskalar ($t_1$) sind.

4. Verfahren zur kryptographischen Signatur eines Datenelements (m) nach einem der vorhergehenden Ansprüche, wobei der zweite Ableitungsskalar ($t_0$) und der erste Ableitungsskalar ($t_1$) jeweils durch Zufallsziehung oder durch Anwendung eines pseudozufälligen Algorithmus auf das Datenelement (m) bestimmt werden.

5. Verfahren zur kryptographischen Signatur eines Datenelements (m) nach einem der vorhergehenden Ansprüche, wobei, wenn der ausgewählte Skalar den Wert eins aufweist, der dritte Zwischenskalar (k") einen Wert ungleich null aufweist.

**6.** Verfahren zur kryptographischen Signatur eines Datenelements (m) nach einem der vorhergehenden Ansprüche, wobei der erste Zwischenskalar (k) durch Zufallsziehung oder durch Anwendung eines pseudozufälligen Algorithmus auf das Datenelement (m) bestimmt wird.

**7.** Verfahren zur kryptographischen Signatur eines Datenelements (m) nach einem der vorhergehenden Ansprüche, wobei der zweite Ableitungsskalar ($t_0$) einen Wert streng größer als eins aufweist.

**8.** Verfahren zur kryptographischen Signatur eines Datenelements (m) nach einem der vorhergehenden Ansprüche, wobei

- der Signaturabschnitt (s) modulo die Ordnung der Gruppe gleich dem Skalar ist, der das Ergebnis eines Produkts des multiplikativen Kehrwerts des ersten Zwischenskalars (k), des multiplikativen Kehrwerts des zweiten Ableitungsskalars ($t_0$) und eines Zwischensignaturskalars ist, wobei der Zwischensignaturskalar gleich der Summe eines Kondensats des Datenelements (m) durch eine Hash-Funktion und eines Skalars ist, der das Ergebnis eines Produkts der affinen Koordinate ($r_1$) des ersten Signaturpunkts und des privaten Schlüssels (d) ist, und
- der andere Signaturabschnitt die affine Koordinate ($r_0$) des zweiten Signaturpunkts ($R_0$) ist.

**9.** Verfahren zur kryptographischen Signatur eines Datenelements (m) nach einem der Ansprüche 1 bis 7,

- wobei der Signaturabschnitt (s) modulo die Ordnung der Gruppe gleich der Summe des ersten Zwischenskalars (k) und eines Skalars ist, der das Ergebnis eines Produkts des privaten Schlüssels (d) und eines Kondensats eines Zwischendatenelements (m') durch eine Hash-Funktion (H) ist, wobei das Zwischendatenelement die Verkettung der affinen Koordinate ($r_1$) des ersten Signaturpunkts, einer anderen affinen Koordinate ($r_{y1}$) des ersten Signaturpunkts, zweier affiner Koordinaten eines anderen Punkts (Q) der Kurve und des Datenelements (m) ist, und
- ferner umfassend einen Schritt (E200) des Bestimmens des anderen Signaturabschnitts durch Verkettung der affinen Koordinate ($r_0$) des zweiten Signaturpunkts ($R_0$) und einer anderen affinen Koordinate ($r_{y0}$) des zweiten Signaturpunkts ($R_0$).

**10.** Verfahren zur kryptographischen Signatur eines Datenelements (m) nach einem der Ansprüche 1 bis 7,

- wobei der Signaturabschnitt (s) modulo die Ordnung der Gruppe gleich der Summe des ersten Zwischenskalars (k) und eines Skalars ist, der das Ergebnis eines Produkts des privaten Schlüssels (d) und eines Kondensats eines Zwischendatenelements (m') durch eine Hash-Funktion (H) ist, wobei das Zwischendatenelement (m') die Verkettung der affinen Koordinate ($r_1$) des ersten Signaturpunkts, einer anderen affinen Koordinate ($r_{y1}$) des ersten Signaturpunkts ($R_1$) und des Datenelements (m) ist, und
- ferner umfassend einen Schritt (E201) des Bestimmens des anderen Signaturabschnitts durch Anwendung der Hash-Funktion (H) auf die Verkettung der affinen Koordinate ($r_0$) des zweiten Signaturpunkts ($R_0$), einer anderen affinen Koordinate ($r_{y0}$) des zweiten Signaturpunkts ($R_0$) und des Datenelements (m).

**11.** Verfahren zur kryptographischen Signatur eines Datenelements (m) nach einem der vorhergehenden Ansprüche, wobei der Schritt (E10) des Bestimmens des ersten Signaturpunkts ($R_1$) und der Schritt (E16) des Bestimmens des Signaturabschnitts (s) in einer Whitebox implementiert werden.

**12.** Verfahren zur kryptographischen Signatur eines Datenelements (m) nach Anspruch 11, wobei nur der Schritt (E10) des Bestimmens des ersten Signaturpunkts ($R_1$) und der Schritt (E16) des Bestimmens des Signaturabschnitts in einer Whitebox implementiert werden.

**13.** Computerprogramm, das Anweisungen umfasst, die durch einen Prozessor ausführbar sind und für die Durchführung eines Verfahrens nach einem der Ansprüche 1 bis 12 bei Ausführung dieser Anweisungen durch den Prozessor geeignet sind.

**14.** Elektronische Vorrichtung (2), die geeignet ist, eine kryptographische Signatur eines Datenelements (m) anhand eines privaten Schlüssels (d) und einer endlichen Gruppe von Punkten einer elliptischen Kurve (E) durchzuführen, wobei die Gruppe mit einer Operation zur Addition zweier Punkte der elliptischen Kurve versehen ist und einen erzeugenden Punkt (G) umfasst, wobei die elektronische Vorrichtung Folgendes umfasst

- einen Block zum Bestimmen eines ersten Signaturpunkts ($R_1$) durch die Kombination, mittels der Operation, von Elementen, die gleich einem ersten abgeleiteten erzeugenden Punkt ($T_0$) der Kurve und in der Zahl gleich einem ersten Zwischenskalar (k) sind, und
- einen Block zum Bestimmen eines Signaturabschnitts (s) anhand des privaten Schlüssels (d), des ersten Zwischenskalars (k), einer affinen Koordinate ($r_1$) des ersten Signaturpunkts

($R_1$) und des Datenelements (m),
- einen Block zum Bestimmen eines zweiten Zwischenskalars (k') durch Addition oder Subtraktion eines Skalars, der das Ergebnis eines Produkts eines ersten Ableitungsskalars ($t_1$) und eines dritten Zwischenskalars (k'') ist, zu oder von einem Skalar, der das Ergebnis eines Produkts des ersten Zwischenskalars (k) und eines ausgewählten Skalars ist,
- einen Block zum Bestimmen eines zweiten Signaturpunkts ($R_0$) durch die Kombination, mittels der Operation, von Elementen, die gleich einem ausgewählten Punkt der Kurve und in der Zahl gleich dem zweiten Zwischenskalar (k') sind, und anderer Elemente, die gleich einem Punkt von einem zweiten abgeleiteten erzeugenden Punkt ($T_1$) oder dem Negativen des zweiten abgeleiteten erzeugenden Punkts ($T_1$) für die Operation und in der Zahl gleich dem dritten Zwischenskalar (k'') sind,

und wobei:

- der erste abgeleitete erzeugende Punkt ($T_0$) gleich der Kombination, mittels der Operation, von Elementen ist, die gleich einem erzeugenden Punkt (G) der Kurve und in der Zahl gleich einem zweiten Ableitungsskalar ($t_0$) sind,
- der zweite abgeleitete erzeugende Punkt ($T_1$) gleich der Kombination, mittels der Operation, von Elementen ist, die gleich dem ausgewählten Punkt der Kurve und in der Zahl gleich dem ersten Ableitungsskalar ($t_1$) sind, und
- die Signatur des Datenelements den Signaturabschnitt (s) und einen anderen Signaturabschnitt umfasst, der anhand einer affinen Koordinate ($r_0$) des zweiten Signaturpunkts ($R_0$) bestimmt wird,
- der erste Signaturpunkt und der zweite Signaturpunkt gleich sind,
- die anderen Elemente gleich dem zweiten abgeleiteten erzeugenden Punkt ($T_1$) sind und das Bestimmen des zweiten Zwischenskalars (k') durch Substraktion erfolgt, oder
- die anderen Elemente gleich dem Negativen des zweiten abgeleiteten erzeugenden Punkts sind und das Bestimmen des zweiten Zwischenskalars (k') durch Addition erfolgt.

**Claims**

1. Method for cryptographic signature of a datum (m), implemented within an electronic device (2) based on a private key (d) and on a finite group of points of an elliptic curve (E), said group being provided with an operation of adding two points of the elliptic curve and comprising a generator point (G), the method comprising the following steps:

- determining (E10) a first signature point ($R_1$) through the combination, by way of said operation, of elements equal to a derived first generator point ($T_0$) of the curve and of number equal to a first intermediate scalar (k), and
- determining (E12, E112) a second intermediate scalar (k') by adding or subtracting, to or from a scalar resulting from a product of the first intermediate scalar (k) and of a selected scalar, a scalar resulting from a product of a first derivation scalar ($t_1$) and of a third intermediate scalar (k''),
- determining (E14, E114) a second signature point ($R_0$) through the combination, by way of said operation, of elements equal to a selected point of the curve and of number equal to the second intermediate scalar (k'), and of other elements equal to a point from among a derived second generator point ($T_1$) or the opposite of the derived second generator point ($T_1$) for said operation and of number equal to the third intermediate scalar (k''),
- determining (E16) a signature portion (s) based on the private key (d), on the first intermediate scalar (k), on an affine coordinate ($r_1$) of the first signature point ($R_1$) and on the datum (m),

and wherein:

- the derived first generator point ($T_0$) is equal to the combination, by way of said operation, of elements equal to the generator point (G) of the curve and of number equal to a second derivation scalar ($t_0$),
- the derived second generator point ($T_1$) is equal to the combination, by way of said operation, of elements equal to the selected point of the curve and of number equal to the first derivation scalar ($t_1$),
- the signature of the datum comprises the signature portion (s) and another signature portion determined based on an affine coordinate ($r_0$) of the second signature point ($R_0$),
- the first signature point and the second signature point are equal,
- the other elements are equal to the derived second generator point ($T_1$) and the step (E12, E112) of determining the second intermediate scalar (k') is based on subtraction, or
- the other elements are equal to the opposite of said derived second generator point and the step (E12, E112) of determining the second intermediate scalar (k') is based on addition.

2. Method for cryptographic signature of a datum (m) according to the preceding claim, wherein:

- the selected scalar is the second derivation scalar $(t_0)$ and the selected point is the generator point (G), or
- the selected scalar has the value one and the selected point is the derived first generator point $(T_0)$.

3. Method for cryptographic signature of a datum (m) according to either one of the preceding claims, said method furthermore comprising the following steps:

- determining (E4) the derived first generator point $(T_0)$ through combination, by way of said operation, of elements equal to the generator point (G) of the curve and of number equal to the second derivation scalar $(t_0)$,
- determining (E6, E106) the derived second generator point $(T_1)$ through combination, by way of said operation, of elements equal to the selected point of the curve and of number equal to the first derivation scalar $(t_1)$.

4. Method for cryptographic signature of a datum (m) according to any one of the preceding claims, wherein the second derivation scalar $(t_0)$ and the first derivation scalar $(t_1)$ are each determined through a random draw or by applying a pseudorandom algorithm to the datum (m).

5. Method for cryptographic signature of a datum (m) according to any one of the preceding claims, wherein, if the selected scalar has the value one, the third intermediate scalar $(k'')$ has a non-zero value.

6. Method for cryptographic signature of a datum (m) according to any one of the preceding claims, wherein the first intermediate scalar (k) is determined through a random draw or by applying a pseudorandom algorithm to the datum (m).

7. Method for cryptographic signature of a datum (m) according to any one of the preceding claims, wherein the second derivation scalar $(t_0)$ has a value strictly greater than one.

8. Method for cryptographic signature of a datum (m) according to any one of the preceding claims, wherein

- the signature portion (s) is equal, modulo the order of the group, to the scalar resulting from a product of the multiplicative inverse of the first intermediate scalar (k), of the multiplicative inverse of the second derivation scalar $(t_0)$ and of an intermediate signature scalar, said intermediate signature scalar being equal to the sum of a hash of the datum (m) by a hash function and of a scalar resulting from a product of the affine coordinate $(r_1)$ of the first signature point and of the private key (d), and
- the other signature portion is the affine coordinate $(r_0)$ of the second signature point $(R_0)$.

9. Method for cryptographic signature of a datum (m) according to any one of Claims 1 to 7,

- wherein the signature portion (s) is equal, modulo the order of the group, to the sum of the first intermediate scalar (k) and of a scalar resulting from a product of the private key (d) and of a hash of an intermediate datum (m') by a hash function (H), said intermediate datum being the concatenation of the affine coordinate $(r_1)$ of the first signature point, of another affine coordinate $(r_{y1})$ of the first signature point, of two affine coordinates of another point (Q) of the curve and of the datum (m), and
- furthermore comprising a step (E200) of determining the other signature portion through concatenation of the affine coordinate $(r_0)$ of the second signature point $(R_0)$ and of another affine coordinate $(r_{y0})$ of the second signature point $(R_0)$.

10. Method for cryptographic signature of a datum (m) according to any one of Claims 1 to 7,

- wherein the signature portion (s) is equal, modulo the order of the group, to the sum of the first intermediate scalar (k) and of a scalar resulting from a product of the private key (d) and of a hash of an intermediate datum (m') by a hash function (H), said intermediate datum (m') being the concatenation of the affine coordinate $(r_1)$ of the first signature point, of another affine coordinate $(r_{y1})$ of the first signature point $(R_1)$ and of the datum (m), and
- furthermore comprising a step (E201) of determining the other signature portion by applying the hash function (H) to the concatenation of the affine coordinate $(r_0)$ of the second signature point $(R_0)$, of another affine coordinate $(r_{y0})$ of the second signature point $(R_0)$ and of the datum (m) .

11. Method for cryptographic signature of a datum (m) according to any one of the preceding claims, wherein the step (E10) of determining the first signature point $(R_1)$ and the step (E16) of determining the signature portion (s) are implemented in white box form.

12. Method for cryptographic signature of a datum (m) according to Claim 11, wherein only the step (E10) of determining the first signature point $(R_1)$ and the step (E16) of determining the signature portion are implemented in white box form.

13. Computer program comprising instructions able to be executed by a processor and designed to implement a method according to any one of Claims 1 to 12 when these instructions are executed by the processor.

14. Electronic device (2) able to cryptographically sign a datum (m) based on a private key (d) and on a finite group of points of an elliptic curve (E), said group being provided with an operation of adding two points of the elliptic curve and comprising a generator point (G), said electronic device comprising

   - a determination block for determining a first signature point $(R_1)$ through the combination, by way of said operation, of elements equal to a derived first generator point $(T_0)$ of the curve and of number equal to a first intermediate scalar (k), and
   - a determination block for determining a signature portion (s) based on the private key (d), on the first intermediate scalar (k), on an affine coordinate $(r_1)$ of the first signature point $(R_1)$ and on the datum (m),
   - a determination block for determining a second intermediate scalar (k') by adding or subtracting, to or from a scalar resulting from a product of the first intermediate scalar (k) and of a selected scalar, a scalar resulting from a product of a first derivation scalar $(t_1)$ and of a third intermediate scalar (k"),
   - a determination block for determining a second signature point $(R_0)$ through the combination, by way of said operation, of elements equal to a selected point of the curve and of number equal to the second intermediate scalar (k'), and of other elements equal to a point from among a derived second generator point $(T_1)$ or the opposite of the derived second generator point $(T_1)$ for said operation and of number equal to the third intermediate scalar (k"),

   and wherein:

   - the derived first generator point $(T_0)$ is equal to the combination, by way of said operation, of elements equal to a generator point (G) of the curve and of number equal to a second derivation scalar $(t_0)$,
   - the derived second generator point $(T_1)$ is equal to the combination, by way of said operation, of elements equal to the selected point of the curve and of number equal to the first derivation scalar $(t_1)$, and
   - the signature of the datum comprises the signature portion (s) and another signature portion determined based on an affine coordinate $(r_0)$ of the second signature point $(R_0)$,
   - the first signature point and the second signature point are equal,
   - the other elements are equal to the derived second generator point $(T_1)$ and the determination of the second intermediate scalar (k') is based on subtraction, or
   - the other elements are equal to the opposite of said derived second generator point and the determination of the second intermediate scalar (k') is based on addition.

Figure 1

Gr = E(K)

Figure 2

Figure 3

Figure 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **S. CHOW et al.** White Box Cryptography and an AES implementation. *Post-Proceedings of the 9th Annual Workshop on Selected Areas in Cryptography (SAC'02),* 15 Août 2002
- Digital Signature Standard (DSS). FIPS 186-4. National Institute of Standards and Technology (NIST), Juillet 2013
- **DE DAMIAN PODDEBNIAK ; JURAJ SOMOROVSKY ; SÉBASTIAN SCHINZEL ; MANFRED LOCHTER ; PAUL ROSIER.** *Attacking Deterministic Signature Schemes using Fault Attacks,* 2018
- **DOTTAX E. et al.** White-Box ECDSA: Challenges and Existing Solutions. *ARXIV.ORG,* 21 Octobre 2021, 184-201